# EUROPÄISCHE PATENTSCHRIFT

(11) **EP 3 448 714 B1**
(45) Veröffentlichungstag und Bekanntmachung des Hinweises auf die Patenterteilung: **18.11.2020**
(21) Anmeldenummer: 17723290.7
(22) Anmeldetag: 25.04.2017
(51) Int. Cl.: B60N 2/08, B60N 2/07

(54) **LÄNGSEINSTELLER UND FAHRZEUGSITZ**
LONGITUDINAL ADJUSTER AND VEHICLE SEAT
DISPOSITIF DE RÉGLAGE LONGITUDINAL ET SIÈGE DE VÉHICULE

(30) Priorität: 28.04.2016 DE 102016207316; 25.08.2016 DE 102016215958
(43) Veröffentlichungstag der Anmeldung: 06.03.2019
(73) Patentinhaber: Adient Luxembourg Holding S.à r.l., 1855 Luxembourg (LU)
(72) Erfinder: FLICK, Joachim, 42499 Hueckeswagen (DE); SPRENGER, Erik, 42929 Wermelskirchen (DE)
(74) Vertreter: Liedhegener, Ralf
(86) Internationale Anmeldenummer: PCT/EP2017/059833
(87) Internationale Veröffentlichungsnummer: WO 2017/186741

(56) Entgegenhaltungen:
- DE-A1-102009 042 460
- DE-A1-102014 225 426

## Beschreibung

Die Erfindung betrifft einen Längseinsteller mit den Merkmalen des Oberbegriffs des Anspruchs 1 sowie einen Fahrzeugsitz.

### Stand der Technik

Ein gattungsgemäßer Fahrzeugsitz bzw. eine Verriegelungsvorrichtung für einen Längseinsteller für einen Fahrzeugsitz sind beispielsweise aus DE102008056683 oder aus der DE 100 50 957 A1 bekannt. Der Fahrzeugsitz weist zur Längsverstellung ein Sitzschienenpaar bestehend aus einer Oberschiene und einer Unterschiene auf, derer beider Wände auf jeder Seite eines Verriegelungselements von den Zähnen des Verriegelungselements durchgriffen werden. Bei dieser Verriegelungsvorrichtung gibt es nur ein Verriegelungselement das in einer definierten Stufung verriegelt.

Aus der DE 10 2014 225 426 A1 ist ein Längseinsteller für einen Fahrzeugsitz bekannt, mit zumindest einer Unterschiene, zumindest einer gegenüber der Unterschiene in Längsrichtung verschiebbaren Oberschiene und zumindest einer Verriegelungseinheit zum Verriegeln der Oberschiene gegenüber der Unterschiene. Weiter umfasst die Verriegelungseinheit zumindest zwei Verriegelungselementen, welche zum Verriegeln von der Oberschiene und der Unterschiene derart stufenweise sperrend in dieselben eingreifen, dass in einer Vorverriegelungsstufe zumindest eine der Verriegelungen die Oberschiene und die Unterschiene mit einem Spiel zueinander vorverriegelt und dass in einer Verriegelungsstufe zumindest eine der Verriegelungen die Oberschiene und die Unterschiene spielfrei miteinander verriegelt.

Aus der DE 10 2008 028 688 A1 ist eine Verriegelungsvorrichtung für einen Fahrzeugsitz bekannt, mit wenigstens einem Verriegelungselement, welches relativ zu wenigstens einem Gegenelement beweglich ist, insbesondere in einer Einfallrichtung, und mit dem Gegenelement zusammenwirkt, um zwei Bauteile des Fahrzeugsitzes miteinander zu verriegeln, wobei das Verriegelungselement mit wenigstens einem Zahn den Randbereich des Gegenelementes kontaktiert und wenigstens an der Oberfläche des Zahnes mit wenigstens einer Deckschicht beschichtet ist. Die Deckschicht besteht aus einer organischen Matrix mit eingelagerten, insbesondere anorganischen Partikeln.

### Aufgabe

Der Erfindung liegt die Aufgabe zu Grunde, einen Längseinsteller der eingangs genannten Art zu verbessern, insbesondere die Lastaufnahmefähigkeit zu erhöhen, sowie einen entsprechenden Fahrzeugsitz bereitzustellen.

### Lösung

Diese Aufgabe wird erfindungsgemäß gelöst, durch einen Längseinsteller, insbesondere für einen Fahrzeugsitz, bevorzugt für einen Fahrzeugfondsitz, mit zwei im Abstand voneinander angeordneten Schienenpaaren. Die Schienenpaare sind jeweils aus einer sitzfesten Oberschiene und einer strukturfesten Unterschiene aufgebaut, mit einem ersten Verriegelungselement und wenigstens einem zweiten Verriegelungselement. Das erste und zweite Verriegelungselement ist an der Oberschiene gehalten und sperrt in einer Verriegelungsstellung eine Bewegung der Oberschiene relativ zur Unterschiene. Die Unterschiene weist Durchbrüche und die Oberschiene schlitzartige Öffnungen auf. Das erste Verriegelungselement und das wenigstens eine zweite Verriegelungselement weisen jeweils an ihren beiden gegenüberliegenden Längsseiten zahnartige Vorsprünge auf, welche in den schlitzartigen Öffnungen geführt sind, und welche in der Verriegelungsstellung sowohl die schlitzartigen Öffnungen als auch die Durchbrüche durchgreifen, wobei ausschließlich das erste Verriegelungselement in der Verriegelungsstellung zur Spielfreistellung des Schienenpaares lediglich teilweise in die Durchbrüche eingreift, während das wenigstens eine zweite Verriegelungselement in seiner Verriegelungsstellung immer vollständig in die Durchbrüche eingeführt ist.

Dadurch, dass ausschließlich das erste Verriegelungselement in der Verriegelungsstellung zur Spielfreistellung des Schienenpaares lediglich teilweise in die Durchbrüche eingreift, während das wenigstens eine zweite Verriegelungselement in seiner Verriegelungsstellung immer vollständig in die Durchbrüche eingeführt ist, kann die maximal mögliche Lastaufnahme durch die Verriegelungselemente sicher gestellt werden. Eine allgemeine Funktionsweise einer Verriegelung von Sitzschienen eines Fahrzeugsitzes mittels solcher Verriegelungselemente ist beispielsweise aus der DE 100 50 957 A1 bekannt, deren diesbezüglicher Offenbarungsgehalt, insbesondere die Ausgestaltung, Dimensionierung, Anordnung und Betätigung der Verriegelungselemente betreffend, ausdrücklich einbezogen wird.

Vorteilhafte Ausgestaltungen, welche einzeln oder in Kombination miteinander eingesetzt werden können, sind Gegenstand der Unteransprüche.

Darüber hinaus können mehrere weitere Verriegelungselemente zur weiteren Steigerung der Lastaufnahmefähigkeit vorgesehen sind. Bevorzugt gelangen insgesamt zwei bis fünf Verriegelungselemente zum Einsatz.

In weiter vorteilhafter Weise kann es vorgesehen sein, dass nur ein einziges Verriegelungselement zur Spielfreistellung der Oberschiene zur Unterschiene eingesetzt ist.

Die äußeren Abmessungen, insbesondere eine Länge und eine Breite, der jeweiligen Verriegelungselemente sind unterschiedlich ausgestaltet. Ferner kann die Anzahl der zahnartigen Vorsprünge an den jeweiligen Verriegelungselementen unterschiedlich sein. Ebenso kann die äußere Form der zahnartigen Vorsprünge an den Verriegelungselementen unterschiedlich ausgebildet sein, insbesondere können die zahnartigen Vorsprünge wenigstens eines Verriegelungselements konisch ausgebildet sein und/oder die zahnartigen Vorsprünge wenigstens eines Verriegelungselements seitlich abgeschrägte Seitenflanken aufweisen. Unter "konisch" im Sinne der Erfindung ist allgemein eine Verjüngung eines Umfangs, einer Breite oder eines Radius zu verstehen.

Die Durchbrüche in der Unterschiene können sowohl zahnartig, beispielsweise in Form eines Rastkamms, mit nach unten gerichteten Öffnungen oder in Form von Rastlöchern, insbesondere mit einem umlaufend geschlossenen Rand, ausgebildet sein.

Die Aufgabe wird ferner gelöst, durch einen Fahrzeugsitz, insbesondere Fahrzeugfondsitz, aufweisend einen Sitzteil, eine an dem Sitzteil angelenkte Lehne und einen zuvor beschriebenen Längseinsteller.

Zusammenfassend ausgeführt erfolgt die Verriegelung mit zwei unabhängigen Rastelementen. Das erste Rastelement kann wie im Stand der Technik nach der DE 100 50 957 A1 beschrieben Beispiel ausgeführt sein, wobei die beiden Profile nach dem Verriegeln spielfrei zueinander fixiert sind. Die Einfalltiefe kann von den aktuellen Einzelteiltoleranzen abhängig sein, was in gewissem Maße auch die Verriegelungsfestigkeit der Rastelemente mit beeinflusst. Das zweite Rastelement kann so ausgelegt sein, dass es beim Verriegeln vollständig in die Zahnlücken der Unterschiene, d.h. bis zum Grund der Zahnlücken, einfällt. Das zweite Rastelement kann somit bevorzugt frei von Einflüssen einer Toleranzkette und immer voll im Eingriff sein. Die Festigkeit der beiden Rastelemente addiert sich somit zu einer Gesamtfestigkeit der Verriegelung. Die Anzahl der Zähne der beiden Verriegelungselemente kann entsprechend der Erfordernisse (benötigte Verriegelungsfestigkeit) nahezu frei gewählt werden. Eine Entriegelung der beiden Verriegelungsplatten kann mit einem Entriegelungssystem, wie es beispielsweise in der DE 10 2015 220 262 A1 beschrieben ist, erfolgen, deren diesbezüglicher Offenbarungsgehalt ausdrücklich einbezogen wird.

### Figuren und Ausführungsformen der Erfindung

Bevor nachfolgend eine bevorzugte Ausgestaltung der Erfindung eingehender an Hand von Zeichnungen beschrieben wird, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Darstellung eines Fahrzeugsitzes,
- Fig. 2:: eine perspektivische Ansicht eines Schienenpaares,
- Fig. 3:: eine schematische Querschnittsdarstellung des Schienenpaares von Fig. 2,
- Fig. 4:: eine ausschnittsweise Schnittdarstellung des Schienenpaares von Fig. 2 in entriegelter Stellung, und
- Fig. 5:: eine ausschnittsweise Schnittdarstellung des Schienenpaares von Fig. 2 in verriegelter Stellung.

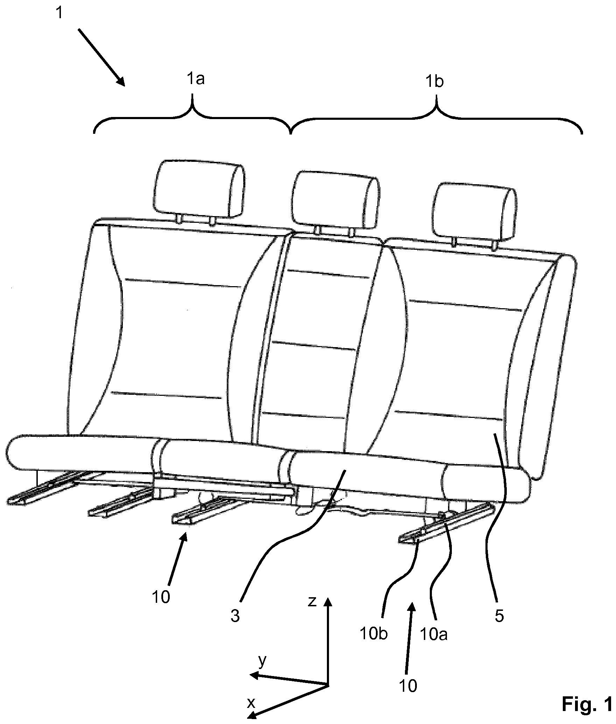

Der in Figur 1 schematisch dargestellte Fahrzeugsitz 1, vorliegend ein Fahrzeugfondsitz, wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 5 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Der in Fig. 1 dargestellte Fahrzeugsitz 1 ist in zwei Bereiche, einem ersten Teil 1a und einem zweiten Teil 1b, aufgeteilt. Der zweite Teil 1b umfasst zwei Sitzplätze, während der erste Teil 1a lediglich ein Sitzplatz bereitstellt. Eine Unterteilung der gesamten Sitzbreite in eine Breite des ersten Teils 1a von 40% der gesamten Sitzbreite und eine Breite des zweiten Teils 1b von 60% des gesamten Sitzbreite entspricht einer üblichen Aufteilung. Jeder der beiden Teile 1a, 1b weist jeweils einen Sitzteil 3 sowie eine gelenkig an dem jeweiligen Sitzteil 3 gelagerte Lehne 5 auf.

Der vorliegende erfindungsgemäße Längseinsteller gelangt bevorzugt in Verbindung mit dem zweiten Teil 1b zum Einsatz, da dieser im Crashfall aufgrund seiner größeren Breite eine höhere Belastung aushalten muss. Die zwei im Abstand voneinander, parallel zueinander, angeordneten Schienenpaare 10 weisen jeweils eine Oberschiene 10a und eine Unterschiene 10b auf, welche einander wechselseitig umgreifen und relativ zueinander verschieblich gelagert sind.

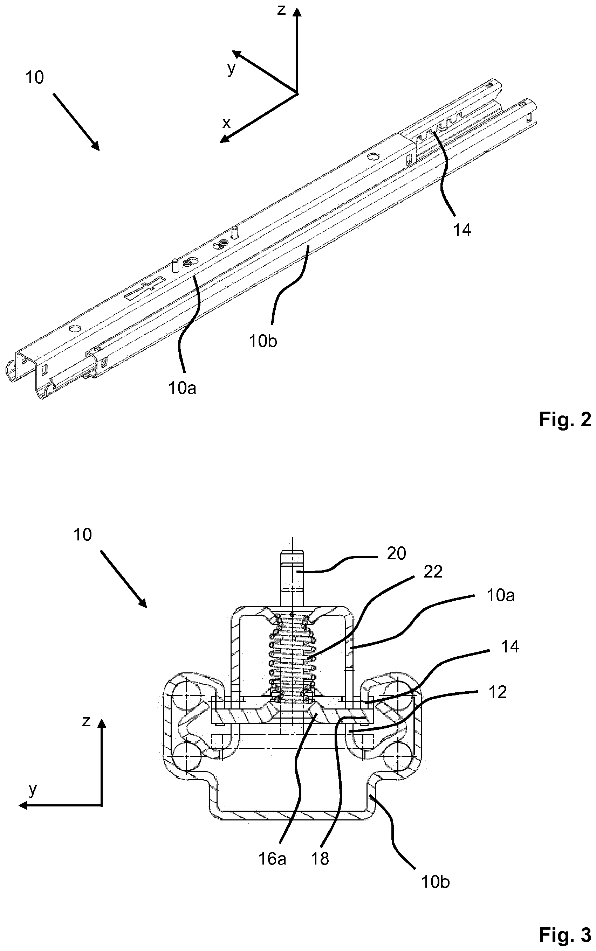

Der in Fig. 2 gezeigte Längseinsteller weist die sitzfeste Oberschiene 10a und die strukturfeste Unterschiene 10b auf. In Fig. 3 ist ein Schienenpaar 10 des Längseinstellers weiter im Detail in einer Querschnittsansicht dargestellt. Das Schienenpaar 10 weist ein erstes Verriegelungselement 16a, welches an der Oberschiene 10a gehalten ist, und in Längsrichtung x zum ersten Verriegelungselement 16a versetzt ein zweites Verriegelungselement 16b - in Fig. 3 aus darstellungstechnischen Gründen nicht gezeigt - auf, welches ebenfalls an der Oberschiene 10a gehalten ist. Die beiden Verriegelungselemente 16a, 16b weisen an ihren beiden gegenüberliegenden Längsseiten, parallel zur Querrichtung y abstehende zahnartige Vorsprünge 18 auf. Die Oberschiene 10a weist schlitzartige Öffnungen 12 auf, in welchen die zahnartigen Vorsprünge 18 der beiden Verriegelungselemente 16a, 16b geführt sind.

Die Unterschiene 10b weist zahnartige Durchbrüche 14 auf, in welche die zahnartigen Vorsprünge 18 der beiden Verriegelungselemente 16a, 16b wenigstens teilweise eintreten, wenn die beiden Verriegelungselemente 16a, 16b in einer Verriegelungsstellung, in welcher eine Bewegung der Oberschiene 10a relativ zur Unterschiene 10b gesperrt ist, überführt sind. Die Durchbrüche 14 können bevorzugt wenigstens eine angeschrägte Seitenfläche aufweisen, insbesondere können die Durchbrüche 14 konisch ausgeführt sein, um ein Eintreten der Vorsprünge 18 zu erleichtern und eine Spielfreistellung zwischen der Oberschiene 10a und der Unterschiene 10b zu ermöglichen.

Zur Überführung der beiden Verriegelungselemente 16a, 16b von der Verriegelungsstellung in die Entriegelungsstellung ist jeweils ein Führungsstift 20 mit den Verriegelungselementen 16a, 16b verbunden. Der Führungsstift 20 ist in einer Durchgangsöffnung der Oberschiene 10a linear geführt. Zur Überführung der beiden Verriegelungselemente 16a, 16b von der Entriegelungsstellung in die Verriegelungsstellung ist jeweils eine Rückstellfeder 22 vorgesehen.

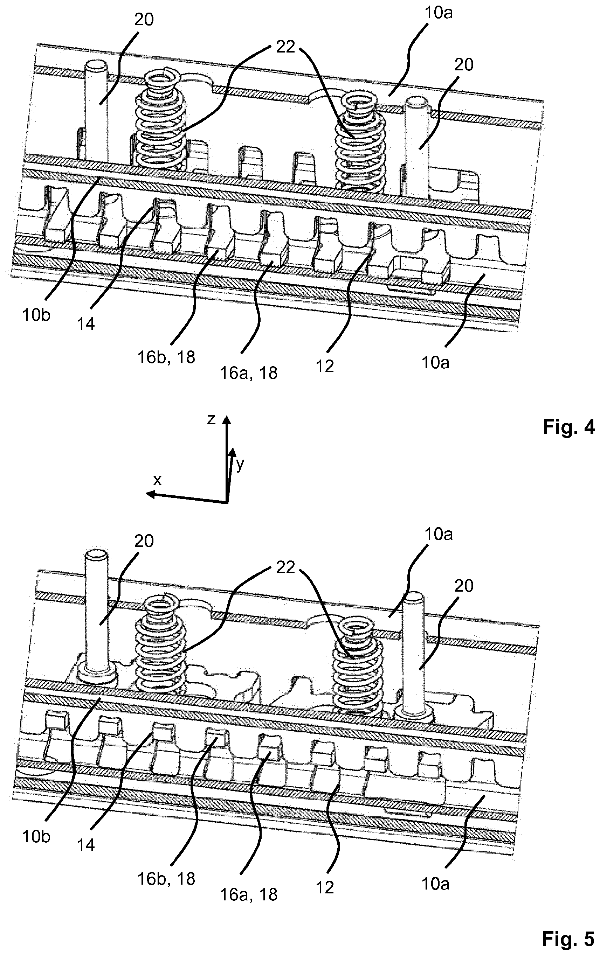

In Fig. 4 ist eine ausschnittsweise Darstellung eines Längsschnitts des Schienenpaares von Fig. 2 in entriegelter Stellung gezeigt. Die beiden Verriegelungselemente 16a, 16b sind maximal nach unten verfahren, so dass diese an einem Bodenabschnitt der schlitzartigen Öffnungen 12 der Oberschiene 10a anliegen. Die zahnartigen Vorsprünge 18 der beiden Verriegelungselemente 16a, 16b sind somit zu den zahnartigen Durchbrüchen 14 der Unterschiene 10b maximal beabstandet und geben das Schienenpaar 10 in Längsrichtung frei.

In Fig. 5 ist eine ausschnittsweise Darstellung eines Längsschnitts des Schienenpaares von Fig. 2 in verriegelter Stellung gezeigt. Das in der Abbildung rechts dargestellte erste Verriegelungselement 16a ist lediglich teilweise in die Durchbrüche 14 eingetreten, und zwar so weit, bis jeweils einer der zahnartigen Vorsprünge 18 spielfreistellend zur Unterschiene 10b und zur Oberschiene 10a in Anlage kommt. Das erste Verriegelungselement 16a erzeugt nun die Spielfreistellung, wie es in der DE 100 50 957 A1 beschrieben ist, deren diesbezüglicher Offenbarungsgehalt hiermit ausdrücklich mit einbezogen wird. Die Einfalltiefe ist somit von den Toleranzen der spielfreistellenden zahnartigen Vorsprünge 18, der schlitzartigen Öffnung 12 in der Oberschiene 10a und der Durchbrüche 14 der Unterschiene 10b abhängig. Die erreichbare Verriegelungsfestigkeit ist in gewissem Maße abhängig von der Eintauchtiefe der zahnartigen Vorsprünge 18 des Verriegelungselement 16a, 16b in die zahnartigen Durchbrüche 14 der Unterschiene 10b, welche wiederum von einem Winkel der Seitenflächen zueinander abhängt.

Das in der Abbildung links dargestellte zweite Verriegelungselement 16b hat keine spielfreistellende Funktion. Die Eintauchtiefe wird durch einen Zahngrund der zahnartigen Durchbrüche 14 der Unterschiene 10b begrenzt. Das zweite Verriegelungselement 16b ist somit dazu eingerichtet, im verriegelten Zustand stets durch die erreichte maximal mögliche Eintauchtiefe, auch die für das zweite Verriegelungselement 16b maximal mögliche Verriegelungsfestigkeit bereitzustellen, bzw. zu erreichen.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 1a: erster Teil
- 1b: zweiter Teil
- 3: Sitzteil
- 5: Lehne
- 10: Schienenpaar
- 10a: Oberschiene
- 10b: Unterschiene
- 12: schlitzartige Öffnung (der Oberschiene)
- 14: Durchbruch (der Unterschiene)
- 16a: erstes Verriegelungselement
- 16b: zweites Verriegelungselement
- 18: zahnartiger Vorsprung (des Verriegelungselements)
- 20: Führungsstift
- 22: Rückstellfeder
- x: Längsrichtung
- y: Querrichtung
- z: Vertikalrichtung

## Patentansprüche

1. Längseinsteller, insbesondere für einen Fahrzeugsitz (1), mit zwei im Abstand voneinander angeordneten Schienenpaaren (10), die jeweils aus einer sitzfesten Oberschiene (10a) und einer strukturfesten Unterschiene (10b) aufgebaut sind, mit einem ersten Verriegelungselement (16a) und wenigstens einem zweiten Verriegelungselement (16b), welche an der Oberschiene (10a) gehalten sind und in einer Verriegelungsstellung eine Bewegung der Oberschiene (10a) relativ zur Unterschiene (10b) sperren, wobei die Unterschiene (10b) Durchbrüche (14) und die Oberschiene (10a) schlitzartige Öffnungen (12) aufweist, wobei das erste Verriegelungselement (16a) und das wenigstens eine zweite Verriegelungselement (16b) an ihren beiden gegenüberliegenden Längsseiten zahnartige Vorsprünge (18) aufweisen, welche in den schlitzartigen Öffnungen (12) geführt sind, und welche in der Verriegelungsstellung sowohl die schlitzartigen Öffnungen (12) als auch die Durchbrüche (14) durchgreifen, wobei ausschließlich das erste Verriegelungselement (16a) in der Verriegelungsstellung zur Spielfreistellung des Schienenpaares lediglich teilweise in die Durchbrüche (14) eingreift, während das wenigstens eine zweite Verriegelungselement (16b) in der Verriegelungsstellung immer vollständig in die Durchbrüche (14) eingeführt ist, **dadurch gekennzeichnet,**
**dass** die äußere Abmessung der jeweiligen Verriegelungselemente (16a, 16b) unterschiedlich ausgestaltet ist.

2. Längseinsteller gemäß Anspruch 1, wobei weitere Verriegelungselemente (16a, 16b) vorgesehen sind.

3. Längseinsteller gemäß Anspruch 2, wobei die Verriegelungselemente (16a, 16b) in Längsrichtung (x) hintereinander angeordnet sind.

4. Längseinsteller gemäß einem der Ansprüche 2 oder 3, wobei insgesamt zwei bis fünf Verriegelungselemente (16a, 16b) zum Einsatz gelangen.

5. Längseinsteller gemäß einem der Ansprüche 1 bis 4, wobei eine Länge und eine Breite der jeweiligen Verriegelungselemente (16a, 16b) unterschiedlich ausgestaltet sind.

6. Längseinsteller gemäß einem der Ansprüche 1 bis 5, wobei die Anzahl der zahnartigen Vorsprünge (18) an den jeweiligen Verriegelungselementen (16a, 16b) unterschiedlich ausgestaltet ist.

7. Längseinsteller gemäß einem der Ansprüche 1 bis 6, wobei die äußere Form der zahnartigen Vorsprünge (18) an den jeweiligen Verriegelungselementen (16a, 16b) unterschiedlich ausgebildet ist.

8. Längseinsteller gemäß Anspruch 7, wobei die zahnartigen Vorsprünge (18) wenigstens eines Verriegelungselements (16a, 16b) parallel zur Querrichtung (y) konisch ausgebildet sind.

9. Längseinsteller gemäß einem der Ansprüche 7 oder 8, wobei die zahnartigen Vorsprünge (18) wenigstens eines Verriegelungselements (16a, 16b), in Querrichtung (y) betrachtet, seitlich abgeschrägte Seitenflanken aufweisen.

10. Längseinsteller gemäß einem der Ansprüche 1 bis 9, wobei die Verriegelungselemente (16a, 16b) jeweils mittels einer mittig angeordneten Rückstellfeder (22) in Richtung der Verriegelungsstellung vorgespannt sind.

11. Längseinsteller gemäß einem der Ansprüche 1 bis 10, wobei die Verriegelungselemente (16a, 16b) jeweils mittels eines in Längsrichtung (x) außermittig angeordneten Führungsstiftes (20) in Vertikalrichtung (z) linear geführt sind.

12. Längseinsteller gemäß Anspruch 11, wobei die Führungsstifte (20) in Durchgangsöffnungen der Oberschiene (10a) geführt sind.

13. Fahrzeugsitz (1), insbesondere Fahrzeugfondsitz, aufweisend einen Sitzteil (3), eine an dem Sitzteil (3) angelenkte Lehne (5) und einen Längseinsteller gemäß einem der Ansprüche 1 bis 12.

14. Fahrzeugsitz (1) gemäß Anspruch 13, wobei der Fahrzeugsitz (1) einen ersten Teil (1a) und einen zweiten Teil (1b) aufweist, wobei die gesamte Sitzbreite im Verhältnis 40:60 zwischen dem ersten Teil (1a) und dem zweiten Teil (1b) aufgeteilt ist.

## Claims

1. Longitudinal adjuster, in particular for a vehicle seat (1), comprising two rail pairs (10) which are arranged at a distance from one another and are each constructed from a seat-mounted top rail (10a) and a structure-mounted bottom rail (10b), comprising a first locking element (16a) and at least one second locking element (16b) which are held on the top rail (10a) and, in a locking position, block a movement of the top rail (10a) relative to the bottom rail (10b), wherein the bottom rail (10b) has apertures (14) and the top rail (10a) has slot-like openings (12), wherein the first locking element (16a) and the at least one second locking element (16b), on the two opposite longitudinal sides thereof, have tooth-like projections (18) which are guided in the slot-like openings (12) and which, in the locking position, pass through both the slot-like openings (12) and also the apertures (14), wherein only the first locking element (16a), in the locking position, only partially engages into the apertures (14) for eliminating play of the rail pair, while the at least one second locking element (16b), in the locking position, is always fully inserted into the apertures (14),
**characterized in that**
the outer dimension of the respective locking elements (16a, 16b) is configured differently.

2. Longitudinal adjuster according to Claim 1, wherein further locking elements (16a, 16b) are provided.

3. Longitudinal adjuster according to Claim 2, wherein the locking elements (16a, 16b) are arranged one behind the other in the longitudinal direction (x).

4. Longitudinal adjuster according to either of Claims 2 and 3, wherein a total of two to five locking elements (16a, 16b) are used.

5. Longitudinal adjuster according to one of Claims 1 to 4, wherein a length and a width of the respective locking elements (16a, 16b) are configured differently.

6. Longitudinal adjuster according to one of Claims 1 to 5, wherein the number of tooth-like projections (18) on the respective locking elements (16a, 16b) is configured differently.

7. Longitudinal adjuster according to one of Claims 1 to 6, wherein the outer shape of the tooth-like projections (18) on the respective locking elements (16a, 16b) is designed differently.

8. Longitudinal adjuster according to Claim 7, wherein the tooth-like projections (18) of at least one locking element (16a, 16b) parallel to the transverse direction (y) are of conical design.

9. Longitudinal adjuster according to either of Claims 7 and 8, wherein the tooth-like projections (18) of at least one locking element (16a, 16b) have, as viewed in the transverse direction (y), laterally beveled side flanks.

10. Longitudinal adjuster according to one of Claims 1 to 9, wherein the locking elements (16a, 16b) are each prestressed in the direction of the locking position by means of a centrally arranged return spring (22).

11. Longitudinal adjuster according to one of Claims 1 to 10, wherein the locking elements (16a, 16b) are each guided linearly in the vertical direction (z) by means of a guide pin (20) which is arranged eccentrically in the longitudinal direction (x).

12. Longitudinal adjuster according to Claim 11, wherein the guide pins (20) are guided in passage openings of the top rail (10a).

13. Vehicle seat (1), in particular a vehicle rear seat, having a seat part (3), a backrest (5) which is connected in an articulated manner to the seat part (3), and a longitudinal adjuster according to one of Claims 1 to 12.

14. Vehicle seat (1) according to Claim 13, wherein the vehicle seat (1) has a first part (1a) and a second part (1b), wherein the total seat width is divided in a ratio of 40:60 between the first part (1a) and the second part (1b).

## Revendications

1. Dispositif de réglage longitudinal, en particulier pour un siège de véhicule (1), comprenant deux paires de rails (10) disposées à distance l'une de l'autre, qui sont chacune constituées d'un rail supérieur (10a) fixé au siège et d'un rail inférieur (10b) fixé à la structure, avec un premier élément de verrouillage (16a) et au moins un deuxième élément de verrouillage (16b) qui sont retenus au niveau du rail supérieur (10a) et qui, dans une position de verrouillage, bloquent un mouvement du rail supérieur (10a) par rapport au rail inférieur (10b), le rail inférieur (10b) présentant des orifices (14) et le rail supérieur (10a) présentant des ouvertures de type fente (12), le premier élément de verrouillage (16a) et l'au moins un deuxième élément de verrouillage (16b) présentant, au niveau de leurs deux côtés longitudinaux opposés, des saillies de type dent (18), qui sont guidées dans les ouvertures de type fente (12) et qui, dans la position de verrouillage, s'engagent à la fois avec les ouvertures de type fente (12) et avec les orifices (14), le premier élément de verrouillage (16a) exclusivement, dans la position de verrouillage, s'engageant seulement en partie dans les orifices (14) afin d'éliminer le jeu de la paire de rails tandis que l'au moins un deuxième élément de verrouillage (16b), dans la position de verrouillage, est toujours introduit complètement dans les orifices (14),
**caractérisé en ce que**
la dimension extérieure des éléments de verrouillage respectifs (16a, 16b) est différente.

2. Dispositif de réglage longitudinal selon la revendication 1, dans lequel des éléments de verrouillage supplémentaires (16a, 16b) sont prévus.

3. Dispositif de réglage longitudinal selon la revendication 2, dans lequel les éléments de verrouillage (16a, 16b) sont disposés l'un derrière l'autre dans la direction longitudinale (x).

4. Dispositif de réglage longitudinal selon l'une quelconque des revendications 2 et 3, dans lequel on utilise au total deux à cinq éléments de verrouillage (16a, 16b).

5. Dispositif de réglage longitudinal selon l'une quelconque des revendications 1 à 4, dans lequel une longueur et une largeur des éléments de verrouillage respectifs (16a, 16b) sont différentes.

6. Dispositif de réglage longitudinal selon l'une quelconque des revendications 1 à 5, dans lequel le nombre des saillies de type dent (18) au niveau des éléments de verrouillage respectifs (16a, 16b) est différent.

7. Dispositif de réglage longitudinal selon l'une quelconque des revendications 1 à 6, dans lequel la forme extérieure des saillies de type dent (18) au niveau des éléments de verrouillage respectifs (16a, 16b) est différente.

8. Dispositif de réglage longitudinal selon la revendication 7, dans lequel les saillies de type dent (18) d'au moins un élément de verrouillage (16a, 16b) sont réalisées sous forme conique parallèlement à la direction transversale (y).

9. Dispositif de réglage longitudinal selon l'une quelconque des revendications 7 et 8, dans lequel les saillies de type dent (18) d'au moins un élément de verrouillage (16a, 16b), vues dans la direction transversale (Y), présentent des flancs latéraux biseautés latéralement.

10. Dispositif de réglage longitudinal selon l'une quelconque des revendications 1 à 9, dans lequel les éléments de verrouillage (16a, 16b) sont à chaque fois précontraints dans la direction de la position de verrouillage au moyen d'un ressort de rappel (22) disposé centralement.

11. Dispositif de réglage longitudinal selon l'une quelconque des revendications 1 à 10, dans lequel les éléments de verrouillage (16a, 16b) sont à chaque fois guidés linéairement dans la direction verticale (z) au moyen d'une goupille de guidage (20) disposée de manière excentrée dans la direction longitudinale (x).

12. Dispositif de réglage longitudinal selon la revendication 11, dans lequel les goupilles de guidage (20) sont guidées dans des ouvertures traversantes du rail supérieur (10a).

13. Siège de véhicule (1), en particulier siège arrière de véhicule, présentant une partie de siège (3), un dossier (5) articulé à la partie de siège (3) et un dispositif de réglage longitudinal selon l'une quelconque des revendications 1 à 12.

14. Siège de véhicule (1) selon la revendication 13, dans lequel le siège de véhicule (1) présente une première partie (1a) et une deuxième partie (1b), la largeur totale du siège étant divisée dans un rapport 40:60 entre la première partie (1a) et la deuxième partie (1b).
